(19) Europäisches Patentamt
European Patent Office
Office européen des brevets

(11) **EP 4 198 101 A1**

(12) **EUROPEAN PATENT APPLICATION**

(43) Date of publication:
**21.06.2023 Bulletin 2023/25**

(21) Application number: **21383163.9**

(22) Date of filing: **20.12.2021**

(51) International Patent Classification (IPC):
**C09K 5/04** *(2006.01)*     **C10M 171/00** *(2006.01)*

(52) Cooperative Patent Classification (CPC):
**C09K 5/045; C10M 171/008;** C09K 2205/12;
C09K 2205/122; C09K 2205/126; C09K 2205/43;
C10M 2203/022; C10M 2203/024;
C10M 2203/1006; C10M 2205/028;
C10M 2207/2835; C10M 2211/0225;
C10N 2020/099; C10N 2020/101; C10N 2020/103;

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Gases Research Innovation and
Technology, S.L.**
**08279 Avinyó (ES)**

(72) Inventors:
• **MANZANO MATO, Víctor**
**08018 BARCELONA (ES)**
• **FERRER ENRÍQUEZ, Nabí**
**08870 SITGES (ES)**
• **GUTIÉRREZ ORTEGA, Angel Eduardo**
**08016 BARCELONA (ES)**
• **MUNTADAS CAMPRUBÍ, Sergi**
**08500 VIC (ES)**

(74) Representative: **ZBM Patents - Zea, Barlocci &
Markvardsen**
**Rambla Catalunya, 123**
**08008 Barcelona (ES)**

(54) **R-22 REPLACEMENT REFRIGERANT COMPOSITION**

(57)     The invention refers to a composition comprising: from 0.1 to 2% by weight of one or more components selected from the group consisting of $(C_4-C_6)$alkane, $(C_4-C_6)$alkene and a mixture thereof; particularly isopentane; from 0.2 to 20% by weight of 1-chloro-3,3,3-trifluoro propene; from 1 to 19% by weight of 1,1,1,2,2- pentafluoro ethane; from 35 to 90% by weight of 1,1,1,2-tetrafluoroethane; and from 5 to 30% by weight of difluoromethane; being the sum of all the components of the composition of 100% by weight. The invention also refers to the use of the composition as refrigerant, a refrigerant system containing thereof; and a refrigerant process using the composition.

EP 4 198 101 A1

(52) Cooperative Patent Classification (CPC): (Cont.)
C10N 2030/64; C10N 2040/30

## Description

The present invention relates to the field of refrigerant compositions. Particularly, to environmentally-friendly refrigerant composition containing a non-ozone-depleting mixture of refrigerant gas combination for the replacement of refrigerant R-22. The invention also relates to processes for cooling articles; and refrigerant systems containing it.

## Background Art

Refrigerant R-22 (chlorodifluoromethane; $CClF_2$) has been widely used as a refrigerant for residential and commercial refrigeration, such as air conditioning systems. However, R-22 contains chlorine atoms and it has been demonstrated its implication in the ozone layer depletion effect. Therefore, the use of R-22 has been banned in some countries and in others its use has been limited. Consequently, significant efforts have been made to replace R-22 with other non-ozone-depleting refrigerant formulation involving the minimum economical and manufacturing production impact.

Some refrigerant compositions have been disclosed in the state of the art for the replacement of R-22. One of these alternative compositions is the combination of 1,1,1,2-tetrafluoroethane ($C_2H_2F_4$; R-134a), pentafluoroethane (R-125) and a hydrocarbon (such as propane, propylene, or isobutane). These refrigerant formulations have a coefficient of performance comparable to R-22. However, it has been found that their use is not entirely satisfactory due to flammability inconveniences or environmental issues. In particular, the vapor above the liquid composition possesses flammability problems and, as a result, these formulations can produce flammable compositions under some leak scenario conditions, which limit its commercial use.

Other refrigerant composition as alternative of R-22 disclosed in the state of the art is the use of R-422A-D refrigerants, which have proven to be valuable retrofit refrigerants for R-22 systems because of their compatibility with mineral oil lubricants. Such compatibility can make these refrigerants economically attractive retrofit options by potentially avoiding the time and expense of changing lubricant types and the attendant changes to seals and other polymeric surfaces that might have been swelled by the mineral oil. However, again the use of R-422A-D is neither entirely satisfactory due to its ecological problems. In fact, the R-422A-D has a global warming potential (GWP) value higher than 1400, becoming it non appropriate as R-22 replacement gas regarding the regulatory rules. Therefore, from what is known in the art it is derived that there is still the need of providing a non-inflammable, non-toxic, and environmentally-friendly refrigerant compositions for the replacement of R-22 having a high coefficient of performance (COP) and being oil compatible.

## Summary of Invention

Inventors have found an environmentally-friendly composition comprising a specific mixture of one or more components selected from the group consisting of ($C_4$-$C_6$)alkane, ($C_4$-$C_6$)alkene and a mixture thereof (particularly ($C_4$-$C_6$)alkane such as iso-pentane (R-601a)); 1-chloro-3,3,3- trifluoro propene (R-1233zd); difluoromethane (R-32); 1,1,1,2-tetrafluoroethane (R-134a); and 1,1,1,2,2-pentafluoroethane (R-125), since this composition is not harmful to the ozone layer and it is global warming potential is low (GWP lower than 1400).

Furthermore, the composition of the invention is non-inflammable and non-toxic, having an occupational exposure limit value (OELv) higher than 400ppm according to HSA's 2016 Code of Practice for the Chemical Agents Regulations. Therefore, the compositions of the present invention can be classified as safety refrigerant class A1 by the Safety Regulations for Refrigeration Installations and Facilities (RSIF).

And, the composition of the invention is also compatible with commonly used oil lubricants, particularly with mineral oil. It is advantageous because it means that the composition is miscible with the circulating oil but without compromising the oil lubrication effect in the refrigerant system. It is advantageous because use of the composition of the present invention as R-22 replacement gas does not implies the change of the lubricant and/or equipment (such as compressors) previously used, reducing the cost of retrofitting of the R-22 facilities.

Thus, for everything mentioned above and demonstrated in the present application, it is concluded that the composition of the invention is an efficient, safe, secure, non-inflammable, and environmentally friendly refrigerant, particularly useful for the replacement of R-22 and the retrofitting of R-22 refrigerant systems. In fact, the composition of the present invention can be incorporated in existing refrigerant systems without being modified/adapted, since it is compatible with the installed base of air conditioning and refrigeration equipment that was typically used for R-22 systems. Therefore, the present invention provides an R-22 retrofit refrigerant composition that is compatible with existing mineral oil lubricants and does not require replacement of the expansion devices in the legacy system.

The first aspect of the invention relates to a composition comprising: from 0.1 to 2% by weight of one or more components selected from the group consisting of ($C_4$-$C_6$)alkane, ($C_4$-$C_6$)alkene and a mixture thereof; from 0.2 to 20% by weight of 1-chloro-3,3,3- trifluoro propene; from 1 to 19% by weight of 1,1,1,2,2- pentafluoro ethane; from 35 to 90% by weight of 1,1,1,2-tetrafluoroethane; and from 5 to 30% by weight of difluoromethane; being the sum of all the components of the composition of 100% by weight.

The second aspect of the invention relates to the use of the composition as defined in the first aspect of the invention as refrigerant.

The third aspect of the invention relates to a refrigerant system comprising the composition of the first aspect of the invention.

The fourth aspect of the invention relates to a refrigeration process comprising going down the temperature of an article using the system as defined in the third aspect of the invention.

It is also a part of the invention a process for the preparation of the composition of the first aspect of the invention.

## Detailed description of the invention

All terms as used herein in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

For the purposes of the present invention, any ranges given include both the lower and the upper endpoints of the range. Ranges given, such as weight, temperatures, times, weights, and the like, should be considered approximate, unless specifically stated.

The terms "percentage (%) by weight", "weight/weight %" and "w/w%" have the same meaning and are used interchangeable. They refer to the percentage of each ingredient of the composition in relation to the total weight of the composition.

As it is mentioned above, the first aspect of the invention is a composition comprising:

From 0.1 to 2% by weight of one or more components selected from the group consisting of $(C_4-C_6)$alkane, $(C_4-C_6)$alkene and a mixture thereof;
From 0.2 to 20% by weight of 1-chloro-3,3,3- trifluoro propene;
From 1 to 19% by weight of 1,1,1,2,2- pentafluoro ethane;
From 35 to 90% by weight of 1,1,1,2-tetrafluoroethane; and
From 5 to 30% by weight of difluoromethane;
Being the sum of all the components of the composition of 100% by weight.

In an embodiment, the composition comprises:

From 0.1 to 2% by weight of one or more components being $(C_4-C_6)$alkanes;
From 0.2 to 20% by weight of 1-chloro-3,3,3- trifluoro propene;
From 1 to 19% by weight of 1,1,1,2,2- pentafluoro ethane;
From 35 to 90% by weight of 1,1,1,2-tetrafluoroethane; and
From 5 to 30% by weight of difluoromethane;
Being the sum of all the components of the composition of 100% by weight.

In an embodiment, the composition comprises:

From 0.1 to 2% by weight of one or more components being $(C_4-C_6)$alkenes;
From 0.2 to 20% by weight of 1-chloro-3,3,3- trifluoro propene;
From 1 to 19% by weight of 1,1,1,2,2- pentafluoro ethane;
From 35 to 90% by weight of 1,1,1,2-tetrafluoroethane; and
From 5 to 30% by weight of difluoromethane;
Being the sum of all the components of the composition of 100% by weight.

In an embodiment, the composition comprises:

From 0.1 to 2% by weight of one or more components being a mixture of one or more $(C_4-C_6)$alkanes with one or more $(C_4-C_6)$alkenes;
From 0.2 to 20% by weight of 1-chloro-3,3,3- trifluoro propene;
From 1 to 19% by weight of 1,1,1,2,2- pentafluoro ethane;
From 35 to 90% by weight of 1,1,1,2-tetrafluoroethane; and
From 5 to 30% by weight of difluoromethane;

Being the sum of all the components of the composition of 100% by weight.

For the purpose of the invention, the term "alkene" refers to an unsaturated branched or linear hydrocarbon which contains the number of carbon atoms specified in the description or claims and that also contains at least one double bond. In an embodiment, the composition of the invention as defined herein below and above comprises from one or more (C₄-C₆)alkenes selected from the group consisting of butenes encompassing n-butene, and isobutene; pentenes encompassing 1-pentene, cis-2-pentene, and trans-2-pentene and mixtures thereof. In an embodiment, the composition of the invention comprises the (C₄-C₆)alkene isobutene. The terms "isobutene", "isobutylene", and "2-methylpropene" have the same meaning and are used interchangeable. In particular, isobutene has the molecular formula $(CH_3)_2C=CH_2$ (CAS number 115-11-7).

For the purpose of the invention, the term "alkane" refers to a saturated branched or linear hydrocarbon which contains the number of carbon atoms specified in the description or claims. In an embodiment, the composition of the invention as defined herein below and above comprises from one or more (C₄-C₆)alkanes selected from the group consisting of butanes encompassing n-butane, isobutane, 3-methylpentane; and pentanes encompassing n-pentane and isopentane. In an embodiment, the composition of the invention as defined herein below and above comprises the (C₄-C₆)alkane isopentane. The terms "isopentane" and "R-601a", have the same meaning and are used interchangeable. In particular, "R-601a" has the molecular formula $C_5H_{12}$ (CAS number 78-78-4).

In an embodiment, the composition comprises:

From 0.1 to 2% by weight of isobutene;
From 0.2 to 20% by weight of 1-chloro-3,3,3- trifluoro propene;
From 1 to 19% by weight of 1,1,1,2,2- pentafluoro ethane;
From 35 to 90% by weight of 1,1,1,2-tetrafluoroethane; and
From 5 to 30% by weight of difluoromethane;
Being the sum of all the components of the composition of 100% by weight.

In an embodiment, the composition comprises:

From 0.1 to 2% by weight of isopentane;
From 0.2 to 20% by weight of 1-chloro-3,3,3- trifluoro propene;
From 1 to 19% by weight of 1,1,1,2,2- pentafluoro ethane;
From 35 to 90% by weight of 1,1,1,2-tetrafluoroethane; and
From 5 to 30% by weight of difluoromethane;
Being the sum of all the components of the composition of 100% by weight.

In an embodiment, the composition comprises:

From 0.1 to 2% by weight of a mixture of isopentane and isobutene;
From 0.2 to 20% by weight of 1-chloro-3,3,3- trifluoro propene;
From 1 to 19% by weight of 1,1,1,2,2- pentafluoro ethane;
From 35 to 90% by weight of 1,1,1,2-tetrafluoroethane; and
From 5 to 30% by weight of difluoromethane;
Being the sum of all the components of the composition of 100% by weight.

In an embodiment, the composition comprises:

from 0.1 to 0.7% by weight of one or more components selected from the group consisting of (C₄-C₆)alkane, (C₄-C₆)alkene and a mixture thereof;
from 0.2 to 10% by weight of 1-chloro-3,3,3- trifluoro propene;
from 4 to 10% by weight of 1,1,1,2,2- pentafluoro ethane;
from 65 to 85% by weight of 1,1,1,2-tetrafluoroethane; and
from 10 to 24% by weight of difluoromethane;
being the sum of all the components of the composition of 100% by weight.

In an embodiment, the composition comprises:

from 0.1 to 0.7% by weight of one or more components being (C₄-C₆)alkanes;
from 0.2 to 10% by weight of 1-chloro-3,3,3- trifluoro propene;

from 4 to 10% by weight of 1,1,1,2,2- pentafluoro ethane;
from 65 to 85% by weight of 1,1,1,2-tetrafluoroethane; and
from 10 to 24% by weight of difluoromethane;
being the sum of all the components of the composition of 100% by weight.

In an embodiment, the composition comprises:

from 0.1 to 0.7% by weight of one or more components being $(C_4$-$C_6)$alkenes;
from 0.2 to 10% by weight of 1-chloro-3,3,3- trifluoro propene;
from 4 to 10% by weight of 1,1,1,2,2- pentafluoro ethane;
from 65 to 85% by weight of 1,1,1,2-tetrafluoroethane; and
from 10 to 24% by weight of difluoromethane;
being the sum of all the components of the composition of 100% by weight.

In an embodiment, the composition comprises:

from 0.1 to 0.7% by weight of one or more components being a mixture of one or more $(C_4$-$C_6)$alkanes with one or more $(C_4$-$C_6)$alkenes;
from 0.2 to 10% by weight of 1-chloro-3,3,3- trifluoro propene;
from 4 to 10% by weight of 1,1,1,2,2- pentafluoro ethane;
from 65 to 85% by weight of 1,1,1,2-tetrafluoroethane; and
from 10 to 24% by weight of difluoromethane;
being the sum of all the components of the composition of 100% by weight.

In an embodiment, the composition comprises:

from 0.1 to 0.7% by weight of isopentane;
from 0.2 to 10% by weight of 1-chloro-3,3,3- trifluoro propene;
from 4 to 10% by weight of 1,1,1,2,2- pentafluoro ethane;
from 65 to 85% by weight of 1,1,1,2-tetrafluoroethane; and
from 10 to 24% by weight of difluoromethane;
being the sum of all the components of the composition of 100% by weight.

In an embodiment, the composition comprises:

from 0.1 to 0.7% by weight of isobutene;
from 0.2 to 10% by weight of 1-chloro-3,3,3- trifluoro propene;
from 4 to 10% by weight of 1,1,1,2,2-pentafluoro ethane;
from 65 to 85% by weight of 1,1,1,2-tetrafluoroethane; and
from 10 to 24% by weight of difluoromethane;
being the sum of all the components of the composition of 100% by weight.

In an embodiment, the composition comprises:

from 0.2 to 0.5% by weight of isobutene;
from 1 to 5% by weight of 1-chloro-3,3,3- trifluoro propene;
from 5 to 8% by weight of 1,1,1,2,2- pentafluoro ethane;
from 70 to 75% by weight of 1,1,1,2-tetrafluoroethane; and
from 15 to 20% by weight of difluoromethane;
being the sum of all the components of the composition of 100% by weight.

In an embodiment, the composition comprises:

0.5% by weight of isobutene;
1.8% by weight of 1-chloro-3,3,3- trifluoro propene;
6.3% by weight of 1,1,1,2,2- pentafluoro ethane;
74.4% by weight of 1,1,1,2-tetrafluoroethane; and
17% by weight of difluoromethane.

In an embodiment, the composition comprises:

> from 0.1 to 0.7% by weight of a mixture of isopentane and isobutene;
> from 0.2 to 10% by weight of 1-chloro-3,3,3- trifluoro propene;
> from 4 to 10% by weight of 1,1,1,2,2- pentafluoro ethane;
> from 65 to 85% by weight of 1,1,1,2-tetrafluoroethane; and
> from 10 to 24% by weight of difluoromethane;
> being the sum of all the components of the composition of 100% by weight.

For the purpose of the invention, the terms "difluoromethane", "R-32", and "HFC 32", have the same meaning and are used interchangeable. In particular, "R-32" has the molecular formula $CH_2F_2$ (CAS number 75-10-5).

The term "R-1233zd" is used herein to refer to the compound "1,1,1-trifluo-3-chloropropane", independent of whether it is the cis- form, the trans- form, or a mixture thereof. The terms "cisHFCO-1233zd" and "transHFCO-1233zd" are used herein to describe the cis- and trans- forms of 1,1, 1-trifluo,3-chlororopropene, respectively. The term "HFCO-1233zd" therefore includes within its scope cisHFCO-1233zd, transHFCO-1233zd, and all combination and mixtures of these." Particularly, the terms "trans 1-chloro-3,3,3- trifluoro propene" and "R-1233zdE", have the same meaning and are used interchangeable. "R-1233zdE" has the molecular formula $(E)CF_3CH=CClH$ (CAS number 102687-65-0).

The terms "1,1,1,2,2- pentafluoro ethane" and "R-125", have the same meaning and are used interchangeable. In particular, "R-125" has the molecular formula $CF_3CF_2H$ (CAS number 354-33-6).

The terms "1,1,1,2-tetrafluoroethane" and "R-134a", have the same meaning and are used interchangeable. In particular, "R-134a" has the molecular formula $CF_3CFH_2$ (CAS number 811-97-2).

In an embodiment, the composition of the invention is one wherein the sum of the one or more components selected from the group consisting of $(C_4-C_6)$alkane, $(C_4-C_6)$alkene and a mixture thereof; particularly isopentane, and 1-chloro-3,3,3- trifluoro propene; particularly trans 1-chloro-3,3,3- trifluoro propene is equal to or higher than 0.4% by weight.

In an embodiment, the composition of the invention further comprising an oil lubricant. In an embodiment, the composition of the invention further comprising an oil lubricant selected from the group consisting of mineral oil, polyol ester (POE), polyalphaolefin, poly alkylene glycol oil, alkylbenzene and mixtures thereof. The term "alkyl" refers to a saturated straight, or branched hydrocarbon chain which contains the number of carbon atoms specified in the description or claims. Examples include, among others, the group methyl, ethyl, propyl, isopropyl, butyl, isobutyl, sec-butyl, and tert-butyl. The term "alkylene" refers to a bivalent saturated straight, or branched hydrocarbon chain which contains the number of carbon atoms specified in the description or claims. For the purpose of the invention, the term "bivalent" refers to a moiety that is bond to two other moieties.

In an embodiment, the composition of the invention is one having a global warming potential (GWP) value equal to or lower than 1400 $t_{eq}$ $CO_2$.

It is also part of the invention a process for the preparation of the composition of the first aspect of the invention. Commonly, the combination of the ingredients of the composition is performed according to the equilibrium pressure value of each one of them. In particular, the ingredients of the composition of the invention are mixed starting from the ingredient having the lowest equilibrium pressure value to the ingredient having the highest equilibrium pressure value (cf. the *REFPROP* software version 10.0 available by the National Institute of Standards (NIST) on December 9th, 2021). Thus, the specific experimental process conditions for the preparation of the composition of the invention can readily be determined by the skilled in the art according to the specific combination of ingredients of the composition of first aspect of the invention being prepared.

The second aspect of the invention refers to the use of the composition of the first aspect of the invention as refrigerant. For the purpose of the invention, the term "refrigerant" refers to a fluid used in a refrigeration system to remove heat. In an embodiment, the use of the composition of the invention is as R-22 replacement refrigerant. For the purpose of the invention, appropriate compositions for being used as R-22 replacement gases are those that have at least a 70% of the COP value of R-22. It means that the COP value of the R-22 is about 2.30 and the COP value of the compositions of the present invention is equal to or higher than 1.61 In an embodiment, the composition of the invention is one having a coefficient of performance at least 70% of the COP value of R-22. As it is mentioned above, the composition of the invention is appropriate for replacing R-22 and therefore, allowing the retrofitting of R-22 refrigeration systems.

In an embodiment, the composition of the invention is one having a GWP value equal to or lower than 1400 $t_{eq}$ $CO_2$; and a coefficient of performance being at least a 70% of the COP value of R-22.

The third aspect of the invention refers to a refrigerant system comprising the composition as defined in the first aspect of the invention. Appropriate systems for the present invention can be any system known in the state of the art for conducting a freezing process. The composition of the present invention is advantageous because allows providing a refrigerant system by the replacement of the previous containing refrigerant without the need of changing or adapting the existing equipment. In fact, it is only needed to change the existing refrigerant of the system for the composition of the invention.

Examples of suitable freezing systems include, but are not limited to, cold room; continuous or discontinuous cold tunnel; air conditioning, chiller, and liquid immersion freezing.

It is also a part of the invention a process for filling the refrigeration system. In an embodiment, the process for filling the refrigeration system comprises:

a) optionally, removing the refrigeration composition from the refrigeration system;
b) optionally, inertizating the refrigeration system by circulating through the system one or more inert gases; and removing the inert gas from the inerted refrigeration system; and
c) filling the system with a composition of the present invention in liquid phase.

Step a) comprises removing the refrigeration composition from the refrigeration system if present. The removing of the refrigeration composition can be performed by any method known in the state of the art, typically by using a gas recovery machine.

Step b) comprises firstly, the inertization of the empty refrigeration system by circulating through the system one or more inert gases if required. The inertization can be performed by any method known in the state of the art such as the addition of the inert gas. Examples appropriate inert gases include, but not limited to, nitrogen, carbon dioxide, argon, and helium. In case the inertization is required, the process secondly comprises removing the inert gas from the inerted refrigeration system, which can be performed by any method known in the state of the art, typically using a vacuum pump.

Step c) comprises filling the system with a composition of the present invention in liquid phase. Typically, it is performed using a scale to be sure you put the correct mass that the equip needs (each equip specify this mass).

The fourth aspect of the invention refers to a refrigeration process comprising going down the temperature of an article using the system as defined in the third aspect of the invention. In an embodiment, the refrigeration process comprises going down the temperature of an article; particularly from room temperature to -30°C, using the system as defined in the third aspect of the invention. It is advantageous because the refrigeration process of the invention is conducted under such refrigeration conditions that are compatible with any existing refrigerant equipment as defined above. For the purpose of the invention, the term "room temperature" refers to a temperature of the environment, without heating or cooling, and it is generally comprised from 20°C to 25°C.

In an embodiment, the refrigeration process of the invention is performed by direct-contact or indirect-contact of the refrigerant composition with the product to be refrigerated/frozen. Indirect-contact processes involve cooling the surface that is in contact with the product to be refrigerated/frozen; or cooling the air/inert gas that is in the vicinity of the product to be refrigerated/frozen; or cooling the liquid in which the product to be refrigerated/freeze is immersed.

Throughout the description and claims the word "comprise" and variations of the word, are not intended to exclude other technical features, additives, components, or steps. Furthermore, the word "comprise" encompasses the case of "consisting of." Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

**Examples**

**General considerations**

The measurement of coefficient of performance (COP) was performed by using the simulation program Refprop v10, which allows calculating the pressures and enthalpies of the mixture at different temperature and pressure conditions. The measurement comprises firstly, the simulation of the thermodynamic cycle of the mixture, taken into account that the points of the cycle are:

- Evaporator outlet, set to -30°C and quality 1 (all gas).
- Compressor inlet, will have the same pressure as the previous point, with an overheating temperature of 5°C, therefore -25°C.
- Compressor outlet, it will have the same pressure as the condensation (next point) and the same entropy as the compressor inlet.
- Condensation, set at 40°C and quality 0 (all liquid).
- Expansion / Evaporator inlet, it will have the same pressure as the evaporator outlet and the same enthalpy as the condensation.

Once all the values were calculated, the Qevap (evaporation power) and the Qcomp (compression power) were calculated. The Qevap, you need the enthalpy difference between the evaporator inlet and the evaporator outlet (h in kJ/kg), the density of the mixture (at the compressor inlet point) and the compressor flow rate (in our case 1 L/s).

These three values were multiplied, and the coefficient of performance of the refrigerant (Qevap in kW) were calculated. The Qcomp (kW) was obtained using the enthalpy at the evaporator inlet and the enthalpy at the compressor outlet, using the same density and volumetric flow rate values of the compressor. The COP was obtained by dividing Qevap by Qcomp:

$$COP = \frac{Qevap}{Qcomp}$$

For the comparison with R-22, the same procedure mentioned above was performed for calculating R-22's COP, and then the COP value of the tested mixture and the COP value of R-22 were compared. A mixture having a difference of up to 30% in the COP value in comparison to the COP value of R-22 is considered appropriate for being use as R-22 substituent.

The measurement of the GWP ($t_{eq}$ $CO_2$) value of a mixture was performed by searching the values of the GWP of each component individually forming part of the mixture in the f-gas (Regulation of the European Parliament and the Conseil (UE) n° 517/2014 April 16th, 2014). Then, a weighted average is made between the GWP of each component and its composition by mass within the mixture. The resulting value was the GWP.

The determination of the toxicity category was performed according to the Royal Decree 552/2019, of September 27, approving the Safety Regulation for refrigeration facilities and its complementary technical instructions. Reference: BOE-A-2019-15228.

The determination of the flammability was performed following the ASHRAE standard 34/15.

The determination of the oil compatibility was performed following this protocol: the refrigerant mixture was mixed with the tested oil in a container that contains a spyhole large enough to see if the remaining mixture forms: two phases, only one homogeneous phase, or a suspension. In case that the mixture forms two phases with the oil, it means that it is not compatible with the oil.

## 1. Refrigerant composition

### 1.1. Composition

Table 1 shows the qualitative and quantitative composition of the refrigerant compositions of Examples 1-11 of the present invention.

Table 1

| Example N° | Components (%) w/w | | | | | |
|---|---|---|---|---|---|---|
| | R-601a | R-1233zd | R-125 | R-134a | R-32 | isobutene |
| Ex.1 | 0.2 | 3 | 7 | 72.5 | 17 | 0.3 |
| Ex.2 | 0.5 | 3 | 7 | 72.5 | 17 | - |
| Ex.3 | 0.5 | 3 | 7 | 71.5 | 18 | - |
| Ex.4 | 0.5 | 1.8 | 6.3 | 74.4 | 17 | - |
| Ex. 5 | 2 | 13 | 5 | 75 | 5 | - |
| Ex. 6 | 0.5 | 20 | 10 | 59.5 | 10 | - |
| Ex. 7 | 0.5 | 10 | 1 | 74.5 | 14 | - |
| Ex. 8 | 0.2 | 13.5 | 18.5 | 37.8 | 30 | - |
| Ex. 9 | 0.5 | 9 | 6.5 | 79 | 5 | - |
| Ex. 10 | 0.2 | 13.5 | 18.9 | 37.4 | 30 | - |
| Ex. 11 | 0.5 | 2.5 | 2.0 | 90.0 | 5.0 | - |

Table 2 shows the qualitative and quantitative composition of the comparative refrigerant compositions 1-8 falling outside the scope of the present invention, wherein at least one of the ingredients (emphasized in bold) is present in an amount falling outside (above or below) the claimed range.

Table 2

| Comparative Example N° | Components (%) w/w | | | | | |
|---|---|---|---|---|---|---|
| | R-22 | R-601a | R-1233zd | R-125 | R-134a | R-32 |
| Comp. Ex.1 | - | **3** | 13 | 5 | 74 | 5 |
| Comp. Ex.2 | - | 0.5 | **25** | 10 | 54.50 | 10 |
| Comp. Ex.3 | - | 0.5 | 10 | **0** | 75.50 | 14 |
| Comp. Ex.4 | - | 0.2 | 13.50 | **20** | 36.30 | 30 |
| Comp. Ex.5 | - | 0.5 | 9.0 | 6.50 | 81.0 | **3** |
| Comp. Ex.6 | - | 0.2 | 9 | 17.5 | 39.3 | **35** |
| Comp. Ex.7 | - | 0.5 | 1.5 | 2.0 | **91** | 5 |
| Comp. Ex.8 | 100 | - | - | - | - | - |

## 1.2. Preparation process

The refrigerant compositions of the present invention Ex. 1-11 and the comparative refrigerant compositions 1-8 disclosed in Tables 1 and 2, were prepared following the general process as defined herein below using the ingredients and the amounts specifically disclosed in Tables above.

### A. General reference process

i) Bottle inertization

A 1L bottle can be inertizated by nitrogen sweep done to remove all impurities/trace contaminants such as air. The volume of nitrogen to be circulated through the bottle must be at least 2 times the volume of the container. Then, the nitrogen contained inside the bottle was removed by vacuum until achieving at least an absolute pressure of 5 mbar.

A 1L bottle can be filled with a maximum amount of 0.98kg of the mixture of components. Due to this fact, the weight of each ingredient (component) is the result of multiplying the weight % of the ingredient for 0.98kg/L) as detailed herein below for composition Ex.4.

ii) Bottle filling

The ingredients of the compositions as defined in Tables 1 and 2 were added inside a 1L bottle from the lowest to highest equilibrium pressure. It implies the following filling order: R-601, R-1233zd, isobutene (if present), R-134a, R-125, and R-32. With the help of a scale, the amount of the ingredients to be added was controlled. Particularly, the accuracy of the scale was 0.001 kg. The exact amount of each ingredient added in the bottle was the weight difference between the bottle before adding the product and after its addition. Whenever an ingredient was added, the bottle was shaken to ensure that the ingredients were dissolved homogeneously. The maximum filling amount of the 1L bottle is about 0.98kg having a pressure of about 20bar.

### B. Preparation process of composition Ex.4

A 5L bottle with a 4.90kg of the mixture of the components previously disclosed (i.e. 4.90kg= 5L*0.98kg/L) was filled with the following mass amount of the ingredients of the composition of Ex-4 as defined herein below, based on the % by weight amount disclosed above:

1. R-601a = 0.005*4.9 = 0.025kg
2. R-1233zd = 0.018*4.9 = 0.088kg
3. R-134a = 0.744*4.9 = 3.646kg
4. R-125 = 0.063*4.9 = 0.309kg

5. R-32 = 0.17*4.9 = 0.833kg

Each one of the mass amount of the above-mentioned ingredients in the above-fixed order was added inside the bottle.

**1.3. Composition Characterization**

The GWP values, the toxicity and flammability category, the oil compatibility, the % of the COP of the tested composition versus the COP of R-22 are disclosed in Table 3.

Table 3

| Example N° | GWP | %COP vs COP R-22 | Toxicity | Flammability | Oil compatibility |
|---|---|---|---|---|---|
| **Ex.1** | 1397 | 83.8 | Non-toxic | Non-flammable | compatible |
| **Ex.2** | 1397 | 84.0 | Non-toxic | Non-flammable | compatible |
| **Ex.3** | 1389 | 83.8 | Non-toxic | Non-flammable | compatible |
| **Ex.4** | 1399 | 85.3 | Non-toxic | Non-flammable | compatible |
| **Ex.5** | 1282 | 78.4 | Non-toxic | Non-flammable | compatible |
| **Ex.6** | 1269 | 71.0 | Non-toxic | Non-flammable | compatible |
| **Ex.7** | 1195 | 79.6 | Non-toxic | Non-flammable | compatible |
| **Ex.8** | 1391 | 70.1 | Non-toxic | Non-flammable | compatible |
| **Ex.9** | 1391 | 81.7 | Non-toxic | Non-flammable | compatible |
| **Ex.10** | 1399 | 70.0 | Non-toxic | Non-flammable | compatible |
| **Ex.11** | 1391 | 88.8 | Non-toxic | Non-flammable | compatible |
| **Comp. Ex.1** | 1268 | 77.7 | Non-toxic | **flammable** | compatible |
| **Comp. Ex.2** | 1198 | **68.6** | Non-toxic | Non-flammable | compatible |
| **Comp. Ex.3** | 1174 | 79.9 | Non-toxic | **flammable** | compatible |
| **Comp. Ex.4** | **1422** | **69.8** | Non-toxic | Non-flammable | compatible |
| **Comp. Ex.5** | **1406** | 82.6 | Non-toxic | Non-flammable | compatible |
| **Comp. Ex.6** | 1397 | 75.0 | Non-toxic | **flammable** | compatible |
| **Comp. Ex.7** | **1405** | 89.7 | Non-toxic | Non-flammable | compatible |
| **Comp. Ex.8** | **1810** | 100 | Non-toxic | Non-flammable | compatible |

In conclusion, only the compositions of the present invention are non-toxic (Category A), non-inflammable (Category 1) and have the appropriate coefficient of performance without compromising the GWP value (lower than 1400 $t_{eq}$ CO$_2$) for being used at industrial scale as refrigerant in refrigerant systems, particularly as a R-22 replacement refrigerant composition. Furthermore, the retrofit R-22 refrigerant composition of the present invention are compatible with the installed base of air conditioning and refrigeration equipment that was typically used for R-22 air conditioning or refrigeration systems. It means that the compositions of the invention can be incorporated in existing refrigerant systems without being modified.

**Citation List**

1. Regulation of the European Parliament and the Conseil (UE) n° 517/2014 April 16th, 2014
2. Royal Decree 552/2019, of September 27 (BOE-A-2019-15228)
3. ASHRAE standard 34/15.

**Claims**

1. A composition comprising:

   From 0.1 to 2% by weight of one or more components selected from the group consisting of $(C_4-C_6)$alkane, $(C_4-C_6)$alkene and a mixture thereof;
   From 0.2 to 20% by weight of 1-chloro-3,3,3- trifluoropropene;
   From 1 to 19% by weight of 1,1,1,2,2- pentafluoroethane;
   From 35 to 90% by weight of 1,1,1,2-tetrafluoroethane; and
   From 5 to 30% by weight of difluoromethane;
   Being the sum of all the components of the composition of 100% by weight.

2. The composition according to claim 1, wherein the one or more components are $(C_4-C_6)$alkenes; particularly selected from the group consisting of n-butene, isobutene, 1-pentene, cis-2-pentene, trans-2-pentene, and a mixture thereof.

3. The composition according to claim 1, wherein the one or more components are $(C_4-C_6)$alkanes; particularly selected from the group consisting of n-butane, isobutane, 3-methylpentane; n-pentane, isopentane, and a mixture thereof.

4. The composition according to claim 3, wherein the one or more components is the $(C_4-C6)$alkane isopentane.

5. The composition according to claim 4, which comprises from 0.2 to 0.7% by weight of one or more components being the $(C_4-C_6)$alkane isopentane.

6. The composition according to any of the claims 1-5, wherein the 1-chloro-3,3,3- trifluoro propene is trans-1-chloro-3,3,3- trifluoropropene.

7. the composition according to any of the claims 1-6, which comprises:

   from 0.1 to 0.7% by weight of one or more components selected from the group consisting of $(C_4-C_6)$alkane, $(C_4-C_6)$alkene and a mixture thereof;
   from 0.2 to 10% by weight of 1-chloro-3,3,3- trifluoro propene;
   from 4 to 10% by weight of 1,1,1,2,2- pentafluoro ethane;
   from 65 to 85% by weight of 1,1,1,2-tetrafluoroethane; and
   from 10 to 24% by weight of difluoromethane;
   being the sum of all the components of the composition of 100% by weight;
   particularly,
   from 0.2 to 0.5% by weight of isobutene;
   from 1 to 5% by weight of 1-chloro-3,3,3- trifluoro propene;
   from 5 to 8% by weight of 1,1,1,2,2- pentafluoro ethane;
   from 70 to 75% by weight of 1,1,1,2-tetrafluoroethane; and
   from 15 to 20% by weight of difluoromethane;
   being the sum of all the components of the composition of 100% by weight.

8. The composition according to any of the claims 1-7, wherein the sum of the one or more components selected from the group consisting of $(C_4-C_6)$alkane, $(C_4-C_6)$alkene and a mixture thereof and the 1-chloro-3,3,3- trifluoropropene is equal to or higher than 0.4% by weight.

9. The composition according to any of the claims 1-8, having a global warming potential value equal to or lower than 1400 $t_{eq}$ $CO_2$.

10. The composition according to any of the claims 1-9, having a value of the coefficient of performance of at least the 70% of the value of the coefficient of performance of the chlorodifluoromethane.

11. The composition according to any of the claims 1-10, further comprising an oil lubricant; particularly selected from the group consisting of a mineral oil lubricant, mineral oil, polyol ester (POE), polyalphaolefin, polyalkylene glycol oil, alkylbenzene and mixtures thereof.

12. Use of the composition as defined in any of the claims 1-11, as refrigerant; particularly, a non-flammable refrigerant.

**13.** A refrigerant system comprising the composition as defined in any of the claims 1-11.

**14.** The refrigerant system according to claim 13, which is selected from the group consisting of cold room, continuous or discontinuous cold tunnel, air conditioning, chiller, and liquid immersion freezing.

**15.** A refrigeration process comprising going down the temperature of an article using the system as defined in any of the claims 13 or 14.

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/096218 A1 (RACHED WISSAM [FR] ET AL) 18 April 2013 (2013-04-18) * paragraphs [0050], [0053], [0054] * * claims * ----- | 1-15 | INV. C09K5/04 C10M171/00 |
| A | US 2018/043199 A1 (ROBIN MARK L [US]) 15 February 2018 (2018-02-15) * tables 8,12 * * claims * ----- | 1-15 | |

TECHNICAL FIELDS
SEARCHED      (IPC)

C09K
C10M

The present search report has been drawn up for all claims

| Place of search | Date of completion of the search | Examiner |
|---|---|---|
| The Hague | 23 May 2022 | Puetz, Christine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 38 3163

This annex lists the patent family members relating to the patent documents cited in  the above-mentioned European search report.
The members are as contained in the European Patent Office EDP file on
The European Patent Office is in no way liable for these particulars which are merely given for the purpose of information.

23-05-2022

| Patent document cited in search report | | Publication date | Patent family member(s) | | Publication date |
|---|---|---|---|---|---|
| US 2013096218 | A1 | 18-04-2013 | BR 112012032795 | A2 | 20-12-2016 |
| | | | CA     2803843 | A1 | 29-12-2011 |
| | | | CN   102947410 | A | 27-02-2013 |
| | | | CN   106634851 | A | 10-05-2017 |
| | | | EP    2585550 | A1 | 01-05-2013 |
| | | | JP  2013529703 | A | 22-07-2013 |
| | | | US  2013096218 | A1 | 18-04-2013 |
| | | | WO  2011163117 | A1 | 29-12-2011 |
| US 2018043199 | A1 | 15-02-2018 | CN   107530564 | A | 02-01-2018 |
| | | | EP    3265508 | A1 | 10-01-2018 |
| | | | JP    6735766 | B2 | 05-08-2020 |
| | | | JP  2018517789 | A | 05-07-2018 |
| | | | US  2018043199 | A1 | 15-02-2018 |
| | | | WO  2016140938 | A1 | 09-09-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CHEMICAL ABSTRACTS,* 115-11-7
- *CHEMICAL ABSTRACTS,* 78-78-4
- *CHEMICAL ABSTRACTS,* 75-10-5
- *CHEMICAL ABSTRACTS,* 102687-65-0
- *CHEMICAL ABSTRACTS,* 354-33-6
- *CHEMICAL ABSTRACTS,* 811-97-2